Europäisches Patentamt

European Patent Office

Office européen des brevets

(11) Publication number: **0 168 757**
**B1**

# EUROPEAN PATENT SPECIFICATION

(45) Date of publication of patent specification: **23.05.90**

(51) Int. Cl.⁵: **G 02 F 1/133,** H 05 B 33/00

(21) Application number: **85108540.7**

(22) Date of filing: **10.07.85**

(54) Backlighting for electro-optical passive displays and transflective layer useful therewith.

(30) Priority: **20.07.84 US 633123**

(43) Date of publication of application:
**22.01.86 Bulletin 86/04**

(45) Publication of the grant of the patent:
**23.05.90 Bulletin 90/21**

(84) Designated Contracting States:
**DE FR GB IT**

(56) References cited:
**DE-A-2 355 134**
**DE-A-2 449 602**
**DE-A-2 856 170**
**DE-B-2 722 388**
**US-A-3 160 541**
**US-A-3 869 195**

(73) Proprietor: **ROGERS CORPORATION**
**One Technology Drive**
**Rogers Connecticut 06263 (US)**

(72) Inventor: **Harper, William P.**
**Steven Street**
**South Killingly Connecticut (US)**
Inventor: **Lunt, Michael S.**
**Route 97**
**Abbington Connecticut (US)**

(74) Representative: **Heidrich, Udo, Dr. jur., Dipl.-**
**Phys.**
**Rechtsanwalt & Patentanwalt Dipl.-Phys. Dr. jur.**
**U. HEIDRICH Franziskanerstrasse 30**
**D-8000 München 80 (DE)**

Courier Press, Leamington Spa, England.

## Description

Passive liquid crystal display devices are made of a layer of liquid crystal disposed between opposed electrodes activatable in segments. Light passing into the device through the front electrode, which is transparent, is internally reflected from the back of the device, e.g. from a reflective film or coating. As is well known, the light entering at activated segments of the device is modified by the liquid crystals to provide a contrasting visual effect relative to other areas. To obtain a practical display that corresponds to the shape of the activated regions, a contrast ratio of about 2:1 is required where the display and background are of the same color. The contrast ratio varies proportionally with ambient light, assuming a constant electrode potential. For this reason, where liquid crystal devices are desired to be used at night or at low ambient light levels, efforts have been made to provide additional lighting.

Those suggestions which employ an incandescent light source, or other point light source, must contend with the problems of nonuniformity of illumination. Examples are:

Castleberry US—A—4,212,048: transmissive diffuser;

Brooks US—A—4,206,501 and Eberhardt US—A—4,229,783: diffusers for bulbs located behind the display,

Eberhardt: an additional reflective front surface to facilitate diffusion of the ambient light;

Borden, Jr., US—A—3,748,018, a reflector to direct light from the source onto the rear surface of the display.

Others have sought to employ electroluminescent lamps behind the display devices, with selective reflectivity provided in the ambient light mode, namely:

Aldrich US—A—3,869,195: a dichroic wavelength selective reflector,

Myer US—A—3,811,751: a microlouvered light control film,

Saurer et al. US—A—4,138,195: the reflective rear electrode of the EL lamp itself.

These have various drawbacks such as substantial expense and lack of sufficient contrast in one or the other of the modes of operation.

The technical problems of this invention are to provide

a simple, low cost and effective device for uniformly illuminating, from the back, a passive liquid crystal display for viewing at night or under conditions of low ambient light by illumination from the rear;

a device useful with a passive liquid crystal display, to allow the display to be seen in all levels of light and darkness;

an improved transflector and method for its fabrication.

The solutions to this problem are accomplished by claims 1, 8 and 10, respectively.

The remaining claims go further in specifying the invention.

A plurality of ways of carrying out the invention is described in detail below with reference to drawings, namely:

Figs. 1, 2 diagrammatic perspective views of an electro-optical device according to the invention in light and dark ambient conditions, respectively;

Figs. 1a, 2a diagrammatic edge views of the device of Figs. 1 and 2;

Figs. 3, 3a plan and side section representations, respectively, of a magnified view of a portion of the front lamp electrode; and

Fig. 4 a diagrammatic representation of an electro-optical device of the invention showing light paths in light and dark ambient conditions.

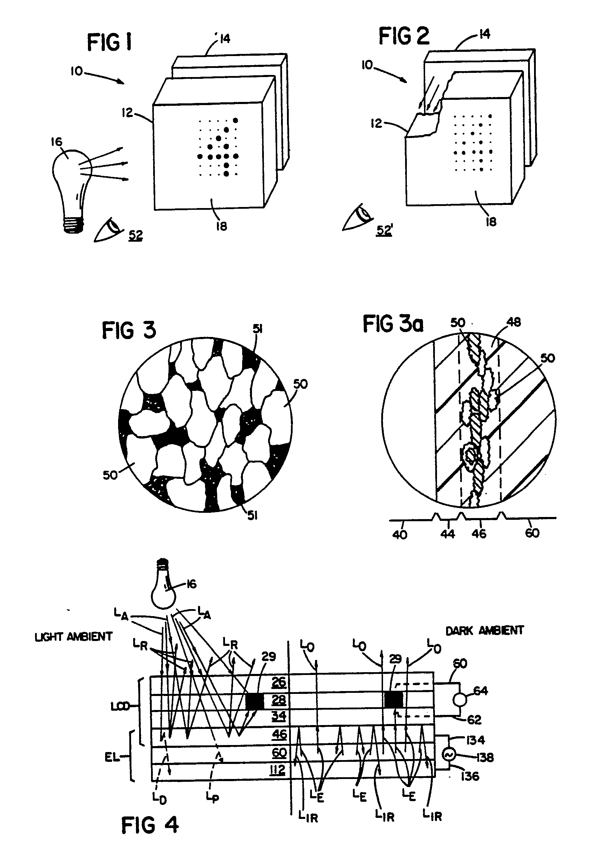

Referring to Figs. 1 and 2, electro-optical device 10 comprises a typical liquid crystal display (LCD) 12 of the twisted nematic type, e.g. as described in Klein U.S. 3,612,654, and a correspondingly sized and shaped electroluminescent lamp 14. The lamp 14 and LCD 12 are held in a fixed relationship by frames 11, shown in dashed line in Figs. 1a and 2a.

In Fig. 1, source 16 of ambient light is radiating light toward the front surface 18 of the LCD. Referring to Fig. 1a, ambient light rays, $L_A$, pass through, in sequence; anti-reflective coating 20, transparent front substrate 22, anti-reflective coating 24, transparent front display electrode 26, liquid crystal 28 (lying between the front electrode and passivating layer 30 in a compartment sealed about the periphery by gasket 32), transparent rear display electrode 34 and transparent rear substrate 36. The light rays passing out of the rear face 38 of the LCD cross gap 40, of about 0.005 inch (0.13 mm), between display 12 and electroluminescent lamp 14, which is not activated, to enter the lamp via front surface 42, passing through lamp transparent protective layer 44 and into front electrode 46.

Referring to Figs. 2, 2a, 3 and 3a, the front lamp electrode 46 is a layer comprised of a light-transmissive plastic binder 48 of, e.g., polyvinylidene fluoride (PVDF), and silver flakes 50 dispersed evenly throughout, the planes of the flakes being generally in alignment with the plane of extent of the electrode, see Fig. 3a, and presenting an aggregate frontal area of about 80 percent of the electrode area, with light-transmissive spaces 51 being defined between some of the flakes. The flakes are formed, e.g. by passing pellets through a ball or hammer milling process, thus preferably they are not uniformly smooth or flat, but have somewhat irregular, and bent surfaces similar to that of, e.g., cornflakes. The aggregate effect of such metal flakes in the layer is to provide diffuse reflectance, which is important to enable viewing of the LCD over the normal angular range.

For ease of illustration, in Fig. 4 only certain components of the electro-optical device are shown: for LCD 12, the front and rear transparent electrodes 26, 34, the liquid crystal layer 28, and the rear reflector layer 46, which is also the front electrode for lamp 14; for lamp 14, the phosphor-containing layer 60 disposed between front and rear lamp electrodes 46, 112.

Referring to Figs. 1a and 4, the ambient light rays, $L_A$, that have passed through the LCD display penetrate through the binder of the front lamp electrode 46 until reflected by the surfaces of the silver flakes. While being generally aligned with the plane of the layer, the flakes are somewhat randomly distributed. They generally are of sufficient thickness to be opaque to visible light, i.e. they have thickness five (preferably substantially more) times the wavelength of visible light. The major portion of the ambient light rays, $L_A$, entering the front lamp electrode 46, e.g. about 80 percent, are reflected out of the electrode as reflected light rays, $L_R$. The semi-random distribution of the flakes and their irregular surfaces result in a general diffuse reflection of light over a range of angles that is suitable for LCD backlighting. Due to the open spaces 51, Fig. 3, between flakes, a minor portion, $L_P$, of the light rays passes through the electrode layer between flakes and is lost. A second minor portion, $L_D$, of the light rays that is reflected from the front surfaces of the silver flakes is re-reflected by the back surfaces of other flakes lying thereabove in the electrode layer, and also pases through spaces 51 of the electrode and is lost.

The reflected light rays, $L_R$, travel a reverse course to that of entering light, out of lamp electrode 46 and through the LCD 12. Light rays $L_R$ and $L_A$ that are incident upon activated sections 29 of the liquid crystals (activated through the action of corresponding segments 26', 34' of the front and rear display electrodes 26, 34, powered by connecting wires 60, 62 from controlled source 64), are relatively modified in a manner well-known in LCD technology to generate to the observer 52 a contrasting light and dark display.

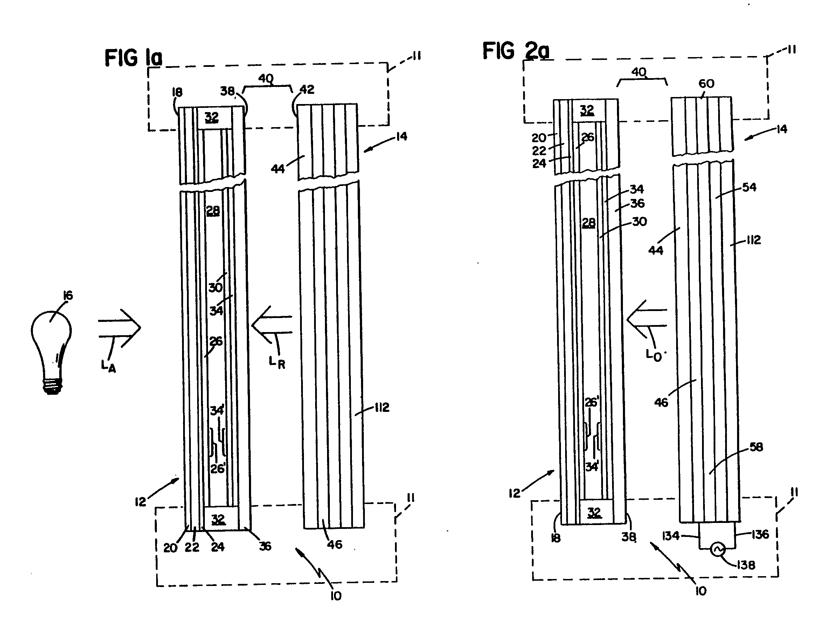

A large multiplicity of discrete LCD picture elements ("pixels") activatable according to a predetermined pattern form desired characters. For example, in Figs. 1 and 2, 5 by 7 pixel grids are shown, with 12 pixels in the grid activated to display the numeral "4". Each pixel is about 300 μm in diameter. As the silver flake particles 50 have average diameter of between about 5 and 10 μm (compared to thickness between about 0.25 and 2.0 μm) and surface areas well less than about one percent of the surface area of each pixel, the electrode of the corresponding portion of the EL lamp includes a very large multiplicity of tiny reflective surfaces and open passages. Thus the resulting display is created by the combined reflectance (or emittance) of a large number of elements, to achieve desired resolution. The results are further improved by the diffuseness of the reflectance from the particles, the diameter of the flakes, in fact, being much less than the discrete surfaces of certain diffusers that heretofore have been employed with LDCs.

In Fig. 2, the electro-optical device 10 is shown in dark ambient conditions, with no light rays directed toward the front surface 18 of the LCD 12. Referring also to Figs. 2a and 4, the electroluminescent lamp 14 has been activated by applying an electrical potential (from source 138 via connecting wires 134, 136) between front lamp electrode 46, described above, and rear lamp electrode 112, across the electroluminescent layer 60 of phosphor particles 56 uniformly dispersed in PVDF binder 58. (The electroluminescent layer is separated from the rear electrode 112 by an insulator layer 54 (Fig. 2a) comprised of barium titanate particles dispersed in PVDF binder). Referring to Figs. 3 and 3a, the silver flake particles are present in a quantity to make sufficient edge-to-edge contact in the layer to provide adequate electrical continuity to apply electrical excitation to the phosphor layer. Thus excited, the phosphor particles emit light rays, $L_E$, a portion of which, having brightness bewteen about 17—340 cd/m$^2$ (5 to 100 ft-lamberts), enter the front lamp electrode 46. Referring again to Fig. 4, many of the light rays, $L_{IR}$, again about 80 percent, entering the electrode are internally reflected back into the phosphor layer; however, a sufficient portion of the light rays, $L_O$, having brightness of about 3,4—17 cd/m$^2$ (1 to 5 ft-lamberts), passes out of the electrode into the protective layer. Rays $L_O$ pass across gap 40, enter LCD 12 via rear surface 38, and then proceed through rear display substrate 36, transparent rear electrode 34, passivating layer 30, liquid crystals 28 (being affected by the activated segments), transparent front display electrode 26 and transparent front substrate 22 with its anti-reflective coatings 20, 24. Observer 52' (Fig. 2) in darkness again observes a contrasting light and dark display.

## Contrast evaluation

To be noticeable to an observer, the light and dark areas of the display must have a minimum level of contrast, e.g. a contrast ratio of 2:1 typically is sufficient.

To establish the efficiency of the device described above, the contrast ratio of light to dark areas of display was evaluated under different ambient light conditions and compared to the performance of the same model LCD with a standard metallized foil reflector on the rear surface.

Measurements were conducted using a Pritchard Photometer, Model 1980A-OP, with the photo-optic setting open and the focus spot at 6 degrees, under four conditions of ambient light: darkened room with black walls (photo darkroom), closed room with lights off, closed room with ceiling lights on, and under bright direct lighting (desk lamp). The level of ambient light present during each of the four tests was determined, then the photometer test spot was focused sequentially on the dark display area and on the light reflective background and the contrast ratio calculated. The results of the evaluation are summarized in Table A. In all tests, the display was powered at 60 volts, 400 hertz. In Tests 1 and 2, the lamp was powered at 115 volts, 1000 Hertz; in Tests 3 and 4, the lamp was turned off.

TABLE A

| Test 1—Complete darkness | Standard LCD | LCD/EL Device (10) |
|---|---|---|
| Background light 0 cd/m² (0 ft-Lamberts) | | |
| Character area (dark) | 0 | 0.21 |
| Backplane (light) | 0 | 0.59 |
| Contrast ratio | 0 | 2.8:1 |

| Test 2—Semi-darkness | | |
|---|---|---|
| Background light 3,06 cd/m² (0.90 ft-Lamberts) | | |
| Character area (dark) | 0.20 | 0.25 |
| Backplane (light) | 0.42 | 0.75 |
| Contrast ratio | 2.1:1 | 3.0:1 |

| Test 3—Low light | | |
|---|---|---|
| Background light 108,8 cd/m² (32.0 ft-Lamberts) | | |
| Character area (dark) | 1.48 | 0.83 |
| Backplane (light) | 4.65 | 3.10 |
| Contrast ratio | 3.1:1 | 3.7:1 |

| Test 4—Bright light | | |
|---|---|---|
| Background light 510—680 cd/m² (150—200 ft-Lamberts) | | |
| Character area (dark) | 21.0 | .9.8 |
| Backplane (light) | 82.0 | 47.0 |
| Contrast ratio | 3.9:1 | 4.8:1 |

As shown, the display on device 10 of the invention was observable at all external light levels, while the display on the standard LCD had borderline contrast in semi-darkness, i.e. dark ambient conditions, and could not be seen when there was no ambient light.

Lamp manufacture

Referring to Fig. 2a, we now describe an electroluminescent lamp 14 formed of a superposed series of the layers including the novel reflective-transmissive conductive front electrode 46 of the invention.

The substrate 112 used in this lamp configuration was copper 0.0014 inch (0.035 mm) thick, one ounce (28.35 g) cut to size and shape corresponding to that of the LCD device 12 with which the lamp was to be used, e.g. 3 inches (7.62 cm) by 4 inches (10.16 cm).

Dielectric insulating layer (54)

A coating composition for forming dielectric layer 54 upon the substrate 112, in this case to act as an insulator between the substrate/electrode 112 and the overlying light-emitting phosphor layer 60 (described below), was prepared as follows:

To prepare the dielectric composition, 10 grams of a PVDF dispersion of 45 percent, by weight, polyvinylidene fluoride (PVDF) in a liquid phase believed to be primarily carbitol acetate (diethyl glycol monoethyl ether) were measured out. This dispersion was obtained commercially from Pennwalt Corporation under the tradename "Kynar Type 202". As the electrical property-imparting additive, 18.2 grams of barium titanate particles (BT206 supplied by Fuji Titanium, having a particle size of less than about 5 microns) were mixed into the PVDF dispersion. An additional amount of carbitol acetate (4.65 grams) was added to the composition to maintain the level of solids and the viscosity of the composition at a proper level to maintain uniform dispersion of the additive particles while preserving the desired transfer performance. It was observed after mixing that the composition was thick and creamy and that the additive particles remained generally uniformly suspended in the dispersion without significant settling during the time required to prepare the example. This is due, at least in part, to the number of solid PVDF particles (typically about 2 microns in diameter) present in the composition.

The composition was poured onto a 320 mesh polyester screen positioned 0.145 inch (3.68 mm) above the substrate, selected for its resistance to the carrier fluid employed and for its ability to withstand the extreme temperatures of treatment, e.g. up to 500°F, (260°C) as described below. Due to its high apparent viscosity, the composition remained on the screen without leaking through until the squeegee was passed over the screen, exerting shear stress on the fluid composition causing it to shear-thin due to its thixotropic character and pass through the screen to be printed, forming a thin layer on the substrate below. The deposited layer was subjected to drying for 2-1/2 minutes at 175°F (80°C) to drive off a portion of the liquid phase, and was then subjected to heating to 500°F (260°C) (above the initial melting point of the PVDF) and

4

was maintained at that temperature for 45 seconds. This heating drove off remaining liquid phase and also fused the PVDF into a continuous smooth film on the substrate.

The resulting thickness of the dried polymeric layer was 0.35 mil ($3.5 \times 10^{-4}$ inch, 0.009 mm).

A second layer of the composition was screen-printed over the first layer on the substrate. The substrate now coated with both layers was again subjected to heating as above. This second heating step caused the separately applied PVDF layers to fuse together. The final product was a monolithic dielectric unit having a thickness of 0.7 mil ($7 \times 10^{-4}$ inch, 0.018 mm) with no apparent interface between the layers of polymer, as determined by examination of a cross-section under microscope. The particles of the additive were found to be uniformly distributed throughout the deposit.

The monolithic unit 54 was determined to have a dielectric constant of about 30.

Light emitting phosphor layer (60)

A coating composition for forming the light emitting phosphor layer 60 was prepared as follows:

To prepare the composition, 18.2 grams of a phosphor additive, zinc sulfide crystals (type #723 from GTE Sylvania, smoothly rounded crystals having particle size of about 15 to 35 µm) were introduced to 10 grams of the PVDF dispersion used above. It was again observed after mixing that despite the smooth shape and relatively high density of the phosphor crystals, the additive particles remained uniformly suspended in the dispersion during the remainder of the process without significant settling.

The composition was superposed by screen printing over the underlying insulator layer 54 through a 280 mesh polyester screen positioned 0.145 inch (3.68 mm) above the substrate to form a thin layer. The deposited layer was subjected to the two stage drying and fusing procedure described above. Subjecting the layers to temperatures above the melting temperature of the PVDF material caused the PVDF to fuse throughout the newly applied layer and between the layers to form a monolithic unit upon the substrate 112. However, the interpenetration of the material of the adjacent layers having different electrical properties was limited by the process conditions to less than about 5 percent of the thickness of the thicker of the adjacent layers, i.e. to less than about 0.06 mil (1.52 µm) so that the different electrical property-imparting additive particles remained stratified within the monolithic unit as well as remaining uniformly distributed throughout their respective layers.

The resulting thickness of the dried polymeric layer was 1.2 mils ($1.2 \times 10^{-3}$ inch 0.03 mm).

The deposited film was tested and found to be uniformly photoluminescent, without significant light or dark spots.

Transflective/conductive front lamp electrode (46)

The coating composition for forming the novel transflective/conductive front lamp electrode 46 of the invention was prepared as follows:

To prepare this conductive composition, 13.52 grams of silver flake (Metz silver Flake #7 from Metz Metallurgical Corporation, So. Plainfield, NJ, having Scott apparent density of 27.2 gm/in$^3$ (1.66 g/cm$^3$) and TAP density by Tap-Pak of 3.1 g/cm$^3$) were added to 55.80 grams of the PVDF dispersion used above. It was again observed after mixing that the additive particles remained uniformly suspended in the dispersion during the remainder of the process without significant settling.

The composition was superposed by the screen printing through a 320 mesh polyester screen positioned 0.15 inch (3.8 mm) above the light-emitting phosphor layer 60. The substrate with the multiple layers coated thereupon was again heated to above the PVDF melting temperature to cause the transflective/conductive front electrode layer to fuse throughout to form a continuous uniform layer and to fuse this layer together with the underlying light-emitting layer to form a monolithic unit. The front electrode layer thus formed is adapted to serve as both a conductor *and* as a reflector, and as the flakes are uniformly dispersed throughout the binder, a level of light transmissivity is achieved through the deposited layer.

The resulting thickness of the dried polymeric layer was 0.5 mil ($0.5 \times 10^{-3}$ inc, 0.013 mm).

The deposited layer was tested and found to have conductivity of 125 ohm-cm, and have light transmissivity of about 3,4—17 cd/m$^2$ (1—5 ft-Lamberts), about 80% of the transmissivity anticipated of an EL lamp of similar construction with a light transmissive, indium-oxide-containing, transparent front electrode.

Conductive buss

The coating composition for forming a conductive buss 120 to distribute current via relatively short paths to the electrode was prepared as follows:

To prepare this conductive composition, 15.76 grams of silver flake (from Metz Metallurgical Corporation, of 325 mesh #7 particle size) were added to 10 grams of the PVDF dispersion used above. The particles remained uniformly suspended in the dispersion during the remainder of the process without significant settling.

The composition was screen printed through a 320 mesh polyester screen positioned 0.15 inch (3.8 mm) above semi-transparent upper electrode 46 as a thin narrow bar extending along one edge of the electrode layer. The deposited layer was subjected to the two stage drying and fusing procedure described above to fuse the PVDF into a continuous smooth film with the silver flake uniformly distributed throughout.

The resulting thickness of the dried polymeric layer was 0.3 mil ($0.3 \times 10^{-3}$ inch, 0.0076 mm).

The deposited film was tested and found to have conductivity of $10^{-3}$ ohm-cm.

This construction with connecting wires 134, 136 (Fig. 2a) and a power source 138, forms a functional electroluminescent lamp 14. Electricity is applied to the lamp via the wires and is distributed by the buss layer to the upper electrode 46 to excite the phosphor crystals in the underlying layer 60, which causes them to emit light.

Due, however, to the damaging effect of moisture on phosphor layer 60, it is desirable to add a moisture impervious protective and insulative layer 44 about the exposed surfaces of the layers of the lamp to seal to the peripheral surface of the substrate 112. This layer 44 is also formed according to the invention, as follows:

Protective-insulative layer (44)

The light transmissive, i.e., clear, PVDF dispersion employed above, devoid of electrical-property additives, is screen printed over the exposed surfaces of the lamp 14 through a 180 mesh polyester screen. The lamp was dried for two minutes at 175°F (80°C) and heated for 45 seconds at 500°F (260°C). The coating and heating procedure was performed twice to provide a total dried film thickness of protective-insulative layer 44 of 1.0 mil ($1 \times 10^{-3}$ inch, 0.025 mm). (By using PVDF as the binder material in this and all the underlying layers, each layer has the same processing requirements and restrictions. Thus the upper layers, and the protective coating, may be fully treated without damage to underlying layers, as might be the case if other different binder systems were employed).

The final heating step results in an electroluminescent lamp 14 of cross-section as shown in the figures. The polymeric material that was superposed in layers upon flexible substrate 112 has fused within the layers and between the layers to form a monolithic unit about 3.4 mils ($3.4 \times 10^{-3}$ inch, 0.086 mm) thick that flexes with the substrate. As all the layers are formed of the same polymeric material, all the layers of the monolithic unit have common thermal expansion characteristics, hence temperature changes during testing did not cause delamination. Also, due to the continuous film-like nature of each layer due to the fusing of its constituent particles of PVDF and the interpenetration of the polymeric material in adjacent layers, including the protective layer 44 covering the top and exposed side surfaces, the lamp is highly resistant to moisture during high humidity testing, and the phosphor crystals did not appear to deteriorate prematurely, as would occur if moisture had penetrated to the crystals in the phosphor layer.

Other embodiments

Numerous other embodiments are within the following claims, as will be obvious to one skilled in the art.

The electroluminescent lamp may be selectively powered independently of the LCD, or may be powered via the same switch so the lamp is activated at all times while the LCD is on. In this state, the light rays emitted by the phosphor layer 60 and passing through the front lamp electrode 46 will supplement the reflected light rays, $L_R$, and, at least in part, replace light ray, $L_D$ and $L_P$, lost through the electrode.

Other materials have sufficient conductivity and reflectivity for use according to the invention. These include, e.g., copper and bronze. Silver coated beads might also be employed. Where it is desirable to increase the conductivity of the electrode without significantly affecting the reflectivity, semi-transparent conductive particles, e.g., indium oxide, may be added to the binder material. Indium oxide or other semi-transparent conductive material might also be used where the level of silver flake present does not provide adequate physical flake-to-flake contact for electrical continuity through the electrode layer, the indium oxide particles acting to conduct current between the flakes.

A further reflective-transmissive-conductive layer might also be formed, e.g. over the flake-containing layer, as a thin layer of metal, e.g. applied by sputtering or evaporation to a front surface of the EL lamp.

A transflective layer having limited or no electrical conductivity may also be formed according to the invention, e.g. for use with another front lamp electrode to improve light transmission and electrical conductivity.

The protective layer 44 of the electroluminescent lamp may be applied as preformed film of PVDF under pressure of 125 pounds per square inch (about 42 kg per cm²), and the lamp heated at 350°F (175°C) for one minute and then cooled while still under pressure. Each separate layer applied may have a dry thickness of as much as .010 inch (0.25 mm), although thickness in the range between about .003 inch (0.076 mm) to .0001 inch (0.0025 mm) is typically preferred. Similarly the conductive layer 46 may be formed on the pre-formed protective layer.

As mentioned, the composition for the transflective layer 46 as well as for other layers may be applied by screen printing, or by various of the doctor blade coating techniques, e.g. knife over roll or knife over table, or by other means. The shear-imparting conditions of screen printing may also be varied, e.g. the squeegee may be advanced along the screen at rates between about 2 and 200 inches (5 to 500 cm) per minute, and the size of the screen orifices may range betwen about 1.4 and 7 mils ($1.4 \times 10^{-3}$ to $7 \times 10^{-3}$ inch, 0.035 to 0.177 mm) on a side.

While materials which consist essentially of homopolymers of PVDF are preferred, other materials may be employed. The guiding criteria for selection are low moisture absorptivity, ability of particles to fuse at elevated temperature to from a continuous moisture barrier film, and, when applied to flexible substrate, flexibility and strength.

The liquid phase of the composition may be selected from the group of materials categorized in the literature as "latent solvents" for PVDF, i.e., those with enough affinity for PVDF to solvate the polymer at elevated temperature, but in which at room temperature PVDF is not substantially soluble, i.e., less than about 5 percent. These include: methyl isobutyl ketone (MIBK), butyl acetate, cyclohexanone, diacetone alcohol, diisobutyl ketone, butyrolactone, tetraethyl urea, isophorone, triethyl phosphate, carbitol acetate, propylene carbonate, and dimethyl phthalate.

Where additional solvation is desired, a limited amount of "active" solvent which, in greater concentrations can dissolve PVDF at room temperature, e.g., acetone, tetrahydrofuran (THF), methyl ethyl ketone (MEK), dimethyl formamide (DMF), dimethyl acetamide (DMAC), tetramethyl urea and trimethyl phosphate, may be added to the carrier. Such a limited amount is believed to act principally in the manner of a surfactant, serving to link between the PVDF polymer particles and the predominant liquid phase, thus to stabilize the PVDF powder dispersion.

As will also be obvious to a person skilled in the art, the viscosity and weight percent of PVDF solids in the coating composition may also be adjusted, e.g. to provide the desired viscosity, suspendability and transfer characteristic to allow the composition to be useful with additive particles of widely different physical and electrical characteristics.

## Claims

1. Electroluminescent lamp (14, EL) comprising (Fig. 2a, 4)
a phosphor layer (60)
disposed between corresponding lamp electrodes (46, 112)
that are adapted to apply an excitation potential (138)
to cause said phosphor layer (60) to emit light ($L_E$),
the front lamp electrode (46)
being light-transmissive to radiation ($L_E$) from said phosphor layer (60), characterized in that
said front lamp electrode (46) comprises (Figs. 3, 3a)
a thin layer of light-transmissive binder (48)
containing a distribution of discrete particles (50) which
are characteristically light-reflective and electrically conductive,
provide aggregate diffuse outward reflectance sufficient to serve as a reflector behind an LCD display (12, LCD) for ambient light ($L_A$, 16) that falls upon said LCD display (12) to illuminate said LCD display (12) under light ambient conditions (Figs. 1, 1a; 4),
are in sufficient electrical continuity to at least assist in applying excitation to said phosphor layer (60), and
have sufficient spaces (51) between them to provide outward escape paths for light ($L_E$) from said excited phosphor layer (60) to back-illuminate said LCD display (12) under dark ambient conditions (Figs. 2, 2a; 4).

2. Lamp of claim 1, characterized in that
said electrical continuity is achieved by
physical contact between said light-reflective particles (50) in said front lamp electrode (46) layer.

3. Lamp of claim 1, characterized in that
said particles (50) in said front lamp electrode (46)
have diameters of the order of about 10 µm in the direction of the plane of said layer in which they reside.

4. Lamp of claim 1, characterized in that
said particles (50) in said front lamp electrode (46)
have the form of metal flakes, and
are generally aligned with the plane of said layer in which they reside.

5. Lamp of any preceding claim, characterized in that
said binder (48)
is a polymer consisting essentially of polyvinylidene fluoride (PVDF).

6. Lamp of claim 1, characterized in that
said particle (50) distribution in said front lamp electroide (46)
provide a reflectance of about 80% to ambient light incident upon the front of said electrode (46).

7. Lamp of claim 1,
adapted to emit radiation through said front lamp electrode (46)
of brightness of min. 3.4 cd/m$^2$ (1 foot-Lambert).

8. Electro-optical display device (10) comprising
the electroluminescent lamp (14, EL) of any preceding claim
in combination with a display (12, LCD) comprising
an array of a large number of discrete LCD picture elements (Figs. 1, 2)
activatable selectively to form desired characters ("4"), wherein

said front lamp electrode (46) is arranged
to serve as a rear reflective surface for said LCD display (12) under light ambient conditions (Figs. 1, 1a; 4), and
said lamp (14) is adapted
to provide light through said front lamp electrode (46) to back-illuminate said display (12) under dark ambient conditions (Figs. 2, 2a; 4).

9. Device of claim 8, characterized in that
the average surface area of a said particle (50) in said front lamp electrode (46)
is less than about 1% of the surface area of a said picture element.

10. Method of forming an electroluminescent lamp (14, EL) comprising
a phosphor-particle-containing layer (60) disposed between
a front electrode (46) and
a corresponding rear electrode (112)
that are adapted to apply an excitation potential to said phosphor particles,
the front lamp electrode (46)
being light transmissive to radiation from said phosphor particles, characterized by
depositing over said phosphor layer (60)
at least one thin layer of
a suspension of light-transmissive polymer solid
dispersed in a liquid phase
containing a uniform dispersion of discrete particles (50)
that are characteristically light-reflective and electrically conductive, and
causing said layer to fuse throughout
to form a continuous electrode layer (46),
said steps being performed in such a manner as to cause:
said discrete particles (50) of said electrode layer (46)
to be distributed throughout to provide sufficient aggregate diffuse reflectance to serve as a diffuse reflector,
to be in sufficient electrical continuity to apply excitation to said phosphor layer (60); and
to be sufficiently spaced to enable escape of light from said excited phosphor layer (60) through said front lamp electrode (46).

11. Method of claim 10, characterized by
heating to fuse said polymer particles (50)
continuously throughout the extent of said layer (46).

12. Method of claim 11, characterized in that
the layer forming said front electrode (46) is deposited by
shear transfer upon a fused first layer
comprising said polymer solid, and
said heating
causes said layers to fuse continuously throughout and between said layers to form a monolithic unit.

13. Method of claim 11 or 12, characterized in that
said layer is deposited by
silk screen printing or doctor blade coating.

14. Method of claim 11 or 12, characterized in that
said discrete particles (50) have
the form of flakes and
during the drying of said electrode layer (46)
a large multiplicity of said particles (50) are caused
to align themselves generally with the extent of the plane of said thin layer.

15. Method of claim 11 or 12, characterized in that
said polymeric binder (48) consists essentially of
polyvinylidene fluoride (PVDF).

**Patentansprüche**

1. Elektrolumineszenz-Lampe (14, EL) mit (Fig. 2a, 4)
einer Leuchtstoff-Schicht (60)
zwischen entsprechenden Lampen-Elektroden (46, 112)
zum Anlegen eines Erregungs-Potentials (138)
für Licht (LE)-Emission der Leuchtstoff-Schicht (60),
wobei die Front-Lampen-Elektrode (46)
lichtdurchlässig ist für Strahlung ($L_E$) aus der Leuchtstoff-Schicht (60), gekennzeichnet dadurch, daß
die Front-Lampen-Elektrode (46) besitzt (Fig. 3, 3a):
eine dünne Schicht lichtdurchlässiges Bindemittel (48)
mit einer Verteilung diskreter Teilchen (50), die

kennlinienmäßig licht-reflektierend und elektrisch leitend sind,

ein aggregiertes diffuses Auswärts-Reflexionsvermögen erzeugen, ausreichend zur Funktion als Reflektor hinter einer LCD-Anzeige (12, LCD) für Umlicht (L$_A$, 16), das auf die LCD-Anzeige (12) auffällt, um die LCD-Anzeige (12) bei hellem Umlicht zu beleuchten (Fig. 1, 1a; 4),

in ausreichender elektrischer Kontinuität vorgesehen sind zumindest zur Unterstützung des Anlegens der Erregung an die Leuchtstoff-Schicht (60) und

ausreichende Zwischenräume (51) zwischen sich besitzen, um nach außen gerichtete Austrittswege für Licht (L$_E$) von der erregten Leuchtstoff-Schicht (60) zum Rückbeleuchten der LCD-Anzeige (12) bei dunklem Umlicht zu bilden (Fig. 2, 2a; 4).

2. Lampe nach Anspruch 1, gekennzeichnet dadurch, daß
die elektrische Kontinuität gebildet ist durch
körperliche Berührung zwischen den licht-reflektierenden Teilchen (50) in der Schicht der Front-Lampen-Elektrode (46).

3. Lampe nach Anspruch 1, gekennzeichnet dadurch, daß
die Teilchen (50) in der Front-Lampen-Elektrode (46)
einen Durchmesser von größenordnungsmäßig ca. 10 μm in Richtung der Ebene der sie aufnehmenden Schicht besitzen.

4. Lampe nach Anspruch 1, gekennzeichnet dadurch, daß
die Teilchen (50) in der Front-Lampen-Elektrode (46)
die Form von Metall-Flocken besitzen und
im wesentlichen ausgerichtet sind zur Ebene der sie aufnehmenden Schicht.

5. Lampe nach einem der vorhergehenden Ansprüche, gekennzeichnet dadurch, daß
das Bindemittel (48)
ein Polymer im wesentlichen aus Polyvinyliden-Fluorid (PVDF) ist.

6. Lampe nach Anspruch 1, gekennzeichnet dadurch, daß
die Verteilung der Teilchen (50) in der Front-Lampen-Elektrode (46)
ein Reflexionsvermögen von ca. 80% für auf die Front-Seite der Elektrode (46) auffallendes Umlicht bildet.

7. Lampe nach Anspruch 1,
geeignet zur Emission von Strahlung durch die Front-Lampen-Elektrode (46)
mit einer Leuchtdichte von mindestens 3,4 cd/m$^2$ (1 foot-Lambert).

8. Elektrooptische Anzeige-Einrichtung (10) mit
der Elektrolumineszenz-Lampe (14, EL) nach einem der vorhergehenden Ansprüche,
zusammen mit einer Anzeige (12, LCD) mit
einer Anordnung einer größeren Anzahl diskreter LCD-Bildelemente (Fig. 1, 2),
die wahlweise ansteuerbar sind zur Bildung gewünschter Zeichen ("4"), wobei
die Front-Lampen-Elektrode (46) angeordnet ist
zum Betrieb als Rück-Reflexions-Fläche für die LCD-Anzeige (12) bei hellem Umlicht (Fig. 1, 1a; 4) und
die Lampe (14) ausgebildet ist
zur Abgabe von Licht durch die Front-Lampen-Elektrode (46) zum Rück-Beleuchten der Anzeige (12) bei dunklem Umlicht (Fig. 2, 2a; 4).

9. Einrichtung nach Anspruch 8, gekennzeichnet dadurch, daß
die mittlere Oberfläche der Teilchen (50) in der Front-Lampen-Elektrode (46)
kleiner als ca. 1% der Oberfläche eines derartigen Bildelements ist.

10. Verfahren zur Herstellung einer Elektrolumineszenz-Lampe (14, EL) mit
einer Leuchtstoffteilchen enthaltenden Schicht (60) zwischen
einer Front-Elektrode (46) und
einer entsprechenden Rück-Elektrode (112)
zum Anlegen eines Erregungs-Potentials an den Leuchtstoff-Teilchen,
wobei die Front-Lampen-Elektrode (46)
lichtdurchlässig für Strahlung von den Leuchtstoff-Teilchen ist, gekennzeichnet durch
Aufbringen auf der Leuchtstoff-Schicht (60)
mindestens einer dünnen Schicht aus
einer Suspension von lichtdurchlässigem Fest-Polymer,
dispergiert in einer Flüssigphase,
mit einer homogenen Dispersion diskreter Teilchen (50),
die kennlinienmäßig licht-reflektierend und elektrich leitend sind, und
durchgehendes Verschmelzen der Schicht,
um eine kontinuierliche Elektroden-Schicht (46) zu bilden,
wobei die Verfahrensschritte derart ausgeführt werden, daß
die diskreten Teilchen (50) der Elektroden-Schicht (46)
durchgehend verteilt werden, um ein ausreichendes aggregiertes diffuses Reflexionsvermögen zur Bildung eines diffusen Reflektors zu erzeugen,
in ausreichender elektrischer Kontinuität vorhanden sind, um die Leuchtstoff-Schicht (60) erregen zu können; und

EP 0 168 757 B1

ausreichend beabstandet sind, um den Austritt von Licht aus der erregten Leuchtstoff-Schicht (60) durch die Front-Lampen-Elektrode (46) zu ermöglichen.

11. Verfahren nach Anspruch 10, gekennzeichnet durch
Erhitzen zum Verschmelzen der Polymer-Teilchen (50)
durchgehend in der gesamten Schicht (46).

12. Verfahren nach Anspruch 11, gekennzeichnet dadurch, daß
die die Front-Elektrode (46) bildende Schicht aufgebracht wird durch
Scher-Transfer auf einer geschmolzenen ersten Schicht
mit dem Fest-Polymer, und
das Erhitzen
die Schichten kontinuierlich durchgehend und zwischen den Schichten verschmelzen läßt zur Bildung einer monolithischen Einheit.

13. Verfahren von Anspruch 11 oder 12, gekennzeichnet dadurch, daß
die Schicht aufgebracht wird durch
Siebdruck oder Streichmesser-Beschichten.

14. Verfahren nach Anspruch 11 oder 12, gekennzeichnet dadurch, daß
die diskreten Teilchen (50)
die Form von Flocken besitzen, und
während des Trocknens der Elektroden-Schicht (46)
eine große Anzahl der Teilchen (50) veranlaßt wird,
sich selbst im wesentlichen entsprechend dem Verlauf der Ebene der dünnen Schicht auszurichten.

15. Verfahren nach Anspruch 11 oder 12, gekennzeichnet dadurch, daß
das Polymer-Bindemittel (48) im wesentlichen besteht aus
Polyvinyliden-Fluorid (PVDF).

**Revendications**

1. Lampe ou voyant électroluminescent (14, EL) comprenant (Figures 2a, 4)
une couche de phosphore (60),
disposée entre des électrodes de lampe correspondantes (46, 112),
qui sont aptes à appliquer un potentiel d'excitation (138),
de telle sorte que la couche de phosphore (60) émette de la lumière (L$_E$)
l'électrode de lampe avant (46)
étant propre à transmettre le rayonnement (L$_E$) provenant de la couche de phosphore (60), caractérisé en ce que
l'électrode de lampe avant (46) comprend (figures 3, 3a)
une mince couche de liant (48) propre à transmettre la lumière
contenant une répartition de particules distinctes (50), qui
sont de façon caractéristique réfléchissantes de la lumière et conductrices électriquement,
assurent une réflectance extérieure diffuse globale suffisante pour servir de réflecteur derrière un dispositif d'affichage à cristaux liquides (12, LCD) pour la lumière ambiante (LA, 16) incidente sur le dispositif d'affichage à cristaux liquides (12), pour éclairer ce dispositif d'affichage à cristaux liquides (12), dans les conditions ambiantes de lumière (figures 1, 1a; 4),
sont en continuité électrique suffisante pour au moins contribuer à l'application de l'excitation sur la couche de phosphore (60), et
présentaient des espaces (51) suffisants entre elles pour fournir à la lumière (L$_E$) des voies d'échappement vers l'extérieur à partir de la couche de phosphore excitée (60) pour éclairer par l'arrière le dispositif d'affichage à cristaux liquides (12) dans des conditions ambiantes sombres (figures 2, 2a; 4).

2. Lampe selon la revendication 1, caractérisée en ce que
la continuité électrique est obtenue par
un contact physique entre les particules réfléchissant la lumière (50) dans la couche d'électrodes (46) de lampe avant.

3. Lampe selon la revendication 1, caractérisée en ce que
les particules (50) dans l'électrode de lampe avant (46)
ont des diamètres de l'ordre d'environ 10 µm dans la direction du plan de la couche dans laquelle elles résident.

4. Lampe selon la revendication 1, caractérisée en ce que
les particules (50) dans l'électrode de lampe avant (46)
ont la forme de paillettes métalliques, et
sont de façon générale alignées avec le plan de la couche dans laquelle elles résident.

5. Lampe selon l'une quelconque des revendications précédentes, caractérisée en ce que
le liant (48)
est un polymère constitué essentiellement par du fluorure de polyvinylidène (PVDF).

6. Lampe selon la revendication 1, caractérisée en ce que
la répartition des particules (50) dans l'électrode de lampe avant (46)

10

assure une réflectance d'environ 80% vis-à-vis de la lumière ambiante incidente sur l'avant de ladite électrode (46).

7. Lampe selon la revendication 1,
apte à émettre un rayonnement à travers l'électrode de lampe avant (46)
d'une brillance d'au moins 3,4 cd/m$^2$ (1 pied-Lambert).

8. Dispositif d'affichage électro-optique (10) comprenant
la lampe électroluminescente (14, EL) selon l'une quelconque des revendications précédentes,
en combinaison avec un dispositif d'affichage (12, LCD) comprenant,
un ensemble constitué par un grand nombre d'éléments d'images LCD distincts (figures 1, 2),
pouvant être activés sélectivement pour former des caractères souhaités ("4"), dans lequel
l'électrode de lampe avant (46) est agencée
pour servir de surface réfléchissante arrière pour le dispositif d'affichage à cristaux liquides (12) dans des conditions ambiantes claires de lumière (figures 1, 1a; 4), et
la lampe (14) est apte
à fournir de la lumière à travers cette électrode de lampe avant (46) pour éclairer par l'arrière le dispositif d'affichage (12) dans des conditions ambiantes sombres (figures 2, 2a; 4).

9. Dispositif selon la revendication 8, caractérisé en ce que
la surface moyenne d'une particule (50) dans l'électrode de lampe avant (46)
est inférieure à environ 1% de la surface d'un élément d'image.

10. Procédé pour former une lampe électroluminescente (14, EL) comprenant
une couche (60) contenant des particules de phosphore disposées entre
une électrode avant (46), et
une électrode arrière correspondante (112),
qui sont aptes à appliquer un potentiel d'excitation aux particules de phosphore,
l'électrode de lampe avant (46)
étant propre à transmettre la rayonnement provenant des particules de phosphore caractérisé par les étapes consistant à
déposer sur la couche de phosphore (60)
au moins une mince couche d'une
suspension d'un solide polymère propre à transmettre la lumière
dispersé en phase liquide
contenant une dispersion uniforme de particules distinctes (50)
qui sont de façon caractéristique réfléchissantes de la lumière et conductrices électriquement, et
provoquer la fusion complète de cette couche,
pour former une couche d'électrode continue (46),
ces étapes étant effectuées de manière à obtenir que
les particules distinctes (50) de la couche d'électrodes (46)
soient réparties dans toute la couche pour assurer une réflectance diffuse totale suffisante pour servir de réflecteur diffus,
soient en continuité électrique suffisante pour appliquer l'excitation à la couche de phosphore (60); et
soient suffisamment espacées pour permettre l'échappement de la lumière à partir de la couche de phosphore excitée (60) à travers l'électrode de lampe avant (46).

11. Procédé selon la revendication 10, caractérisé en ce que
l'on chauffe pour fusionner les particules de polymère (50)
de façon continue dans la totalité de la couche (46).

12. Procédé selon la revendication 11, caractérisé en ce que
la couche formant l'électrode avant (46) est déposée par
transfert de cisaillement sur une première couche fusionnée
comprenant le solide polymère, et en ce que
le chauffage
provoque la fusion continue des couches dans leur totalité et entre les couches pour former une unité monolithique.

13. Procédé selon la revendication 11 ou 12, caractérisé en ce que
la couche est déposée par impression sérigraphique ou revêtement à la raclette.

14. Procédé selon la revendication 11 ou 12, caractérisé en ce que
les particules distinctes (50) ont
la forme de paillettes, et en ce que
pendant le séchage de la couche d'électrode (46)
une grande quantité de particules (50) sont amenées
à s'aligner de façon générale avec le plan de la couche mince.

15. Procédé selon la revendication 11 ou 12, caractérisé en ce que
le liant polymérique (48) est essentiellement constitué par
du fluorure de polyvinylidène (PVDF).

FIG 1

FIG 2

FIG 3

FIG 3a

FIG 4

LIGHT AMBIENT

DARK AMBIENT

FIG 1a

FIG 2a

EP 0 168 757 B1